# EUROPEAN PATENT APPLICATION

(11) **EP 4 304 057 A1**
(43) Date of publication of application: **10.01.2024**
(21) Application number: 22762899.7
(22) Date of filing: 04.02.2022
(51) Int. Cl.: H02K 3/24, H02K 9/19

(54) **COIL AND MOTOR PROVIDED WITH SAME**

(30) Priority: 02.03.2021 JP 2021032942
(71) Applicant: Panasonic Intellectual Property Management Co., Ltd., Kadoma-shi, Osaka 571-0057 (JP)
(72) Inventor: ICHIKAWA, Tetsuro, Osaka 571-0057 (JP); MAEKAWA, Takeru, Osaka 571-0057 (JP)
(74) Representative: SSM Sandmair
(86) International application number: PCT/JP2022/004537
(87) International publication number: WO 2022/185842

(57) **Abstract**

A coil is used for a stator of a motor. An axial direction that is a direction in which an axial center of the motor extends is used to intersect with a gravity direction. The coil is formed by winding a conductive wire having a quadrangular cross section and stacking the conductive wire n turns (n is an integer of 2 or more). The coil includes coil ends at both ends in the axial direction. In one coil end, a k-th turn (k is an integer and 1 ≤ k ≤ n) is higher than other turns, and the k-th turn is positioned on a lower side in the gravity direction with respect to one another turn.

## Description

### TECHNICAL FIELD

The present disclosure relates to a coil and a motor provided with the same.

### BACKGROUND ART

In recent years, a demand for motors has increased in industrial and vehicular applications. In particular, the motors are desired to be improved in efficiency and be reduced in cost.

As one of methods for improving efficiency of the motor, it is known that a space factor of a coil arranged in a slot of a stator is improved. An increase in the space factor of the coil enables reduction in loss due to a current flowing through the coil when the motor is driven. As a method for improving the space factor of the coil, there is proposed a configuration in which a cast coil made of a copper material is arranged in a slot (see, for example, PTL 1).

As another method for improving the efficiency of the motor, a configuration in which a refrigerant such as oil is injected to a coil arranged in a slot to cool the coil is known (see, for example, PTL 2). In this case, the loss caused by the current flowing through the coil can be suppressed by cooling the coil.

Incidentally, the most heat generated during an operation of the motor is a component through which a large current flows, for example, the coil in the stator. A portion of the coil accommodated in the slot of the stator is in contact with a stator core with an insulator or the like interposed therebetween. Thus, the heat generated in the portion of the coil is dissipated to an outside with the stator core interposed therebetween.

On the other hand, the coil has a portion (hereinafter, may be referred to as a coil end) protruding to an outside of the slot. The coil end is less likely to dissipate heat than other portions of the coil, and heat is easily accumulated. Thus, more loss occurs at the coil end.

In consideration of such a circumstance, PTL 2 discloses a configuration in which oil is injected as a refrigerant to the coil end through an oil pump and a supply pipe.

However, when it is attempted to cool all coils in the stator by injecting the refrigerant, a structure of the supply pipe of the refrigerant becomes complicated. When it is attempted to uniformly supply the refrigerant to each coil end, it is necessary to greatly increase a supply pressure. Thus, a size of a pump for supplying the refrigerant increases. In addition, the amount of refrigerant supplied also increases.

Therefore, it is conceivable that the refrigerant injected to one coil end flows to the adjacent coil end. In this case, the number of coils for supplying the refrigerant, the supply of the refrigerant, and the like can be reduced, and there is a possibility that the above-described problem can be solved.

However, usually, the refrigerant injected to the coil end flows toward a lower side in a gravity direction due to the influence of gravity. Thus, it is difficult to cause the refrigerant to flow to the adjacent coil end.

### Citation List

### Patent Literature

PTL1: German Patent Application Publication No. 102012212637
PTL 2: Unexamined Japanese Patent Publication No. H08-130856

### SUMMARY OF THE INVENTION

The present disclosure has been made in view of such a point, and an object of the present disclosure is to provide a coil that facilitates movement of a refrigerant between adjacent coil ends and a motor provided with the same.

In order to achieve the above object, a coil according to the present disclosure is a coil that is used for a stator of a motor. When an axial direction that is a direction in which an axial center of the motor extends is used to intersect with a gravity direction, the coil is disposed by winding a conductive wire having a quadrangular cross section and stacking the conductive wire n turns in which n is an integer of 2 or more, the coil includes coil ends at both ends in the axial direction, a height of a k-th turn in which k is an integer and 1 ≤ k ≤ n) is higher than a height of another turn in one of the coil ends, and the k-th turn is positioned lower than another turn in the gravity direction.

Preferably, a height of the coil end becomes higher toward the lower side in the gravity direction.

Preferably, a height of a first turn or a height of an n-th turn of the coil end is higher than a height of another turn.

Heights of first and n-th turns of the coil end may be higher than a height of another turn.

Among turns in which a height of the coil end is higher than the height of the other turn, a cutout may be provided in a turn positioned on an upper side in the gravity direction with respect to the other turn.

A motor according to the present disclosure includes a rotor that has a rotary shaft extending in the axial direction, the stator that is provided coaxially with the rotor and is at a predetermined interval from the rotor, and a motor case that accommodates the stator and the rotor on an inside. The stator includes a stator core that includes a plurality of tooth portions, and the coil attached to each of the plurality of tooth portions.

The motor may further include a cooling device that supplies a refrigerant toward the coil. The cooling device may include a pump that discharges the refrigerant, and a supply pipe that is connected to the pump, extends into the motor case, and supplies the refrigerant discharged from the pump toward the coil.

Preferably, the supply pipe includes a first injection port that injects the refrigerant from an upper side in the gravity direction.

Preferably, the supply pipe further includes a second injection port that injects the refrigerant in the axial direction.

Preferably, the coil end includes a first coil end that is one end in the axial direction and a second coil end that is an other end in the axial direction, and
as viewed in the gravity direction, the first injection port is arranged above at least the first coil end.

A surface area of the second coil end may be larger than a surface area of the first coil end.

A surface area of the first coil end may be larger than a surface area of the second coil end.

According to the present disclosure, the amount of refrigerant flowing from one coil end to an adjacent coil end can be increased. Therefore, each coil in the stator, and thus, the motor can be efficiently cooled.

### BRIEF DESCRIPTION OF THE DRAWINGS

Fig. 1A is a schematic cross-sectional view of a motor according to a first exemplary embodiment in an axial direction.
Fig. 1B is a schematic cross-sectional view of the motor in a radial direction.
Fig. 2 is a schematic view of a stator viewed from the axial direction of the motor according to the first exemplary embodiment.
Fig. 3 is a schematic view of a k-th turn of a coil as viewed from the radial direction.
Fig. 4A is a cross-sectional view taken along line IVA-IVA in Fig. 2.
Fig. 4B is a cross-sectional view taken along line IVB-IVB in Fig. 2.
Fig. 5 is a schematic cross-sectional view of a main part of another stator of the motor according to the first exemplary embodiment.
Fig. 6 is a schematic cross-sectional view of a motor according to a variation in an axial direction.
Fig. 7 is a schematic cross-sectional view of a main part of a stator of a motor according to a second exemplary embodiment.
Fig. 8A is a schematic view of a main part of another stator of the motor according to the second exemplary embodiment as viewed from an axial direction.
Fig. 8B is a perspective view of a coil illustrated in Fig. 8A.
Fig. 9 is a schematic cross-sectional view of a motor according to a third exemplary embodiment in an axial direction.
Fig. 10 is a schematic cross-sectional view of a main part of a stator of the motor according to the third exemplary embodiment.
Fig. 11 is a schematic cross-sectional view of another motor according to the third exemplary embodiment in the axial direction.
Fig. 12 is a schematic cross-sectional view of a motor according to another variation in an axial direction.
Fig. 13 is a schematic cross-sectional view of a motor according to still another variation in an axial direction.

### DESCRIPTION OF EMBODIMENT

Hereinafter, exemplary embodiments of the present disclosure will be described in detail with reference to the drawings. The following description of preferable exemplary embodiments is merely illustrative in nature and is not intended to limit the present disclosure, application thereof, or use thereof.

### (First exemplary embodiment)

### [Configuration of motor]

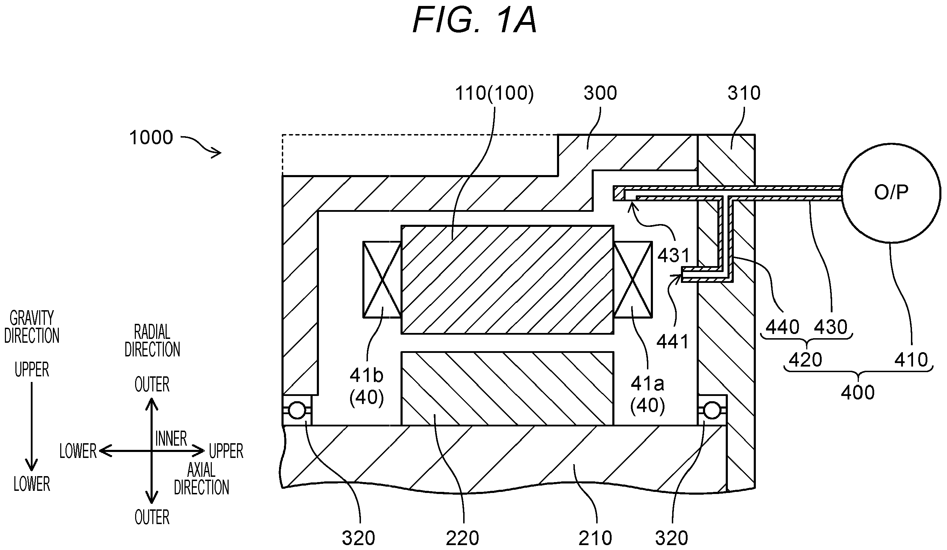

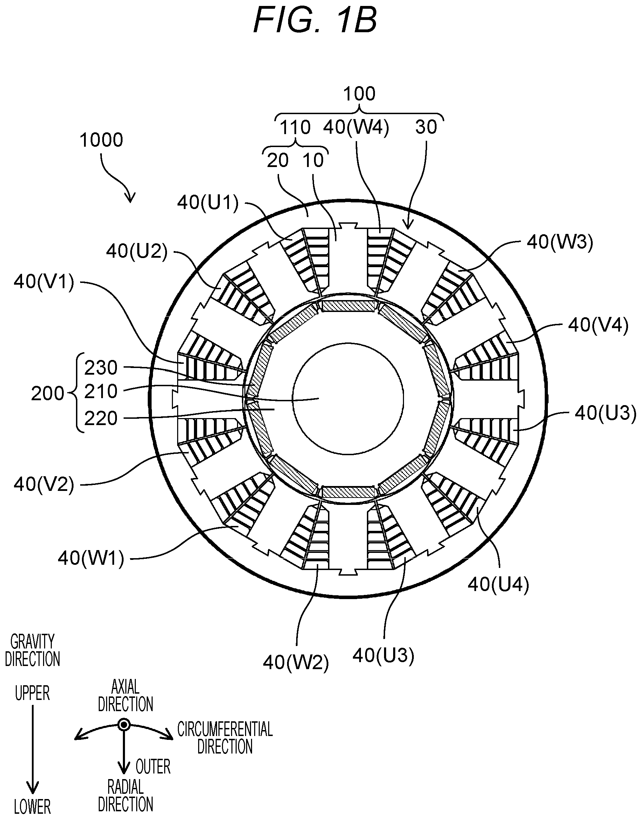

Fig. 1A is a schematic cross-sectional view of motor 1000 according to a first exemplary embodiment in an axial direction. Fig. 1B is a schematic cross-sectional view of motor 1000 in a radial direction. Note that, in the following description, the radial direction of motor 1000 may be referred to as a "radial direction", an outer circumferential direction thereof may be referred to as a "circumferential direction", and a direction in which an axial center included in rotary shaft 210 of motor 1000 extends (a direction perpendicular to a paper surface in Fig. 1B) may be referred to as an "axial direction". In the radial direction, an axial center side of motor 1000 may be referred to as inner or an inner side, and an outer peripheral side may be referred to as outer or an outer side. As illustrated in Fig. 1A, motor 1000 is attached to facility or equipment (not illustrated) such that the radial direction is parallel to a gravity direction. Note that "parallel" in this case means parallel including a manufacturing tolerance of motor 1000 and an attachment tolerance to equipment and the like, and it is not required that the radial direction and the gravity direction are strictly parallel.

In the axial direction, a side on which end plate 310 is provided may be referred to as upper or an upper side, and an opposite side thereof may be referred to as lower or a lower side. Note that, as viewed from the axial direction, motor 1000 has an axial center aligning with an axial center of rotary shaft 210.

As illustrated in Figs. 1A and 1B, motor 1000 includes stator 100, rotor 200, motor case 300, and end plate 310. In addition, cooling device 400 is attached to motor 1000. Details of structures of stator 100 and rotor 200 will be described later.

Motor case 300 is a metal member having a bottomed cylindrical shape and an opening in an upper portion. End plate 310 is a metal member having a plate shape provided to close the opening of motor case 300. Note that, end plate 310 may be made of resin.

Cooling device 400 includes oil pump 410 and supply pipe 420. Supply pipe 420 is a metal member having a hollow structure. Supply pipe 420 includes main pipe 430 and branch pipe 440. One end of supply pipe 420 is connected to oil pump 410. Main pipe 430 extends into motor case 300 through a radially outer side of stator 100. In addition, main pipe 430 branches inside end plate 310. Branched branch pipe 440 extends inside motor case 300. Thus, two ends of supply pipe 420 are arranged inside motor case 300. First injection port 431 is provided at an end of main pipe 430. Second injection port 441 is provided at an end of branch pipe 440. First injection port 431 is arranged on a radially outer side of first coil end 41a. Second injection port 441 is arranged on an axially upper side of first coil end 41a.

A metal member may be used as supply pipe 420. For example, supply pipe 420 can be formed by using a resin member. Supply pipe 420 formed by using the resin member can be expected to have high insulation.

First coil end 41a is an end on an axially upper side of coil 40. As described above, first coil end 41a is a portion of coil 40 that protrudes outside slots 30. Second coil end 41b is an end on an axially lower side of coil 40. Second coil end 41b is a portion of coil 40 that protrudes outside slots 30. Supply pipe 420 may be branched outside motor case 300 or may be branched inside.

When oil pump 410 is driven, oil which is a refrigerant discharged from oil pump 410 is pressure-fed to the inside of motor case 300 through supply pipe 420. Further, oil is injected from both first injection port 431 and second injection port 441 toward first coil end 41a, and first coil end 41a is cooled. As is clear from Fig. 1A, oil is injected from first injection port 431 toward a radially outer surface of first coil end 41a. Oil is injected from second injection port 441 toward a surface on the axially upper side of first coil end 41a. Oil injected to first coil end 41a is recovered in an oil reservoir (not illustrated).

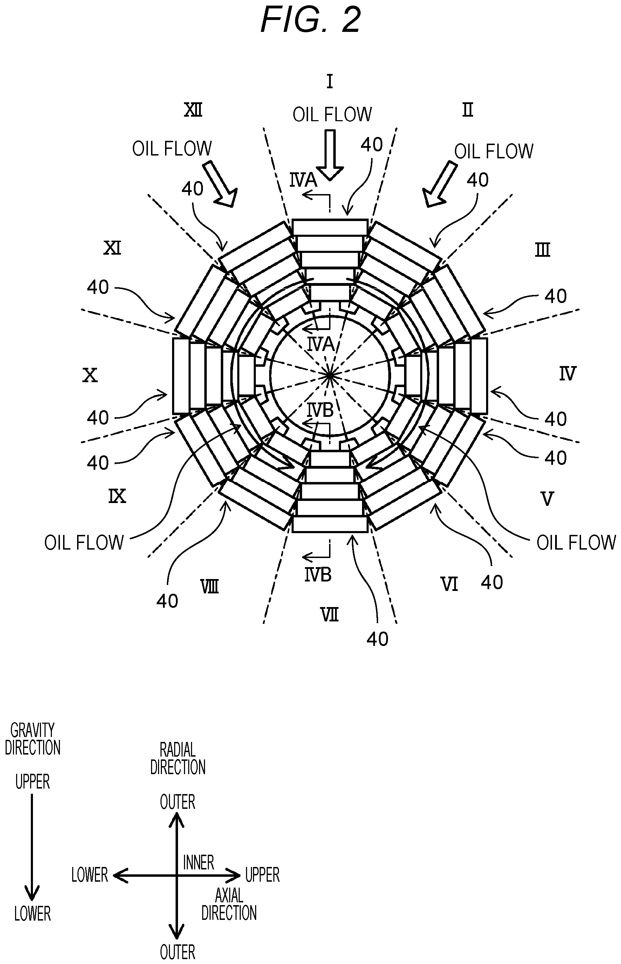

A plurality of first injection ports 431 are provided at the end of main pipe 430, and a plurality of second injection ports 441 are provided at the end of branch pipe 440. Oil is injected from first injection port 431 and second injection port 441 toward first coil ends 41a of a plurality of coils 40 (see, for example, Fig. 2). The ends of main pipe 430 and branch pipe 440 positioned inside motor case 300 may extend by a predetermined length in the circumferential direction.

As illustrated in Fig. 1B, stator 100 includes yoke 20 having an annular ring shape, and a plurality of teeth (tooth portions) 10 connected to an inner periphery of yoke 20 and provided at equal intervals along the inner periphery. Yoke 20 to which teeth 10 are connected may be referred to as stator core 110.

Stator 100 further includes slot 30 provided between teeth 10 adjacent to each other in the circumferential direction, and coil 40 accommodated in slot 30. Stator 100 is arranged on a radially outer side of rotor 200 with a predetermined interval between the stator and rotor 200.

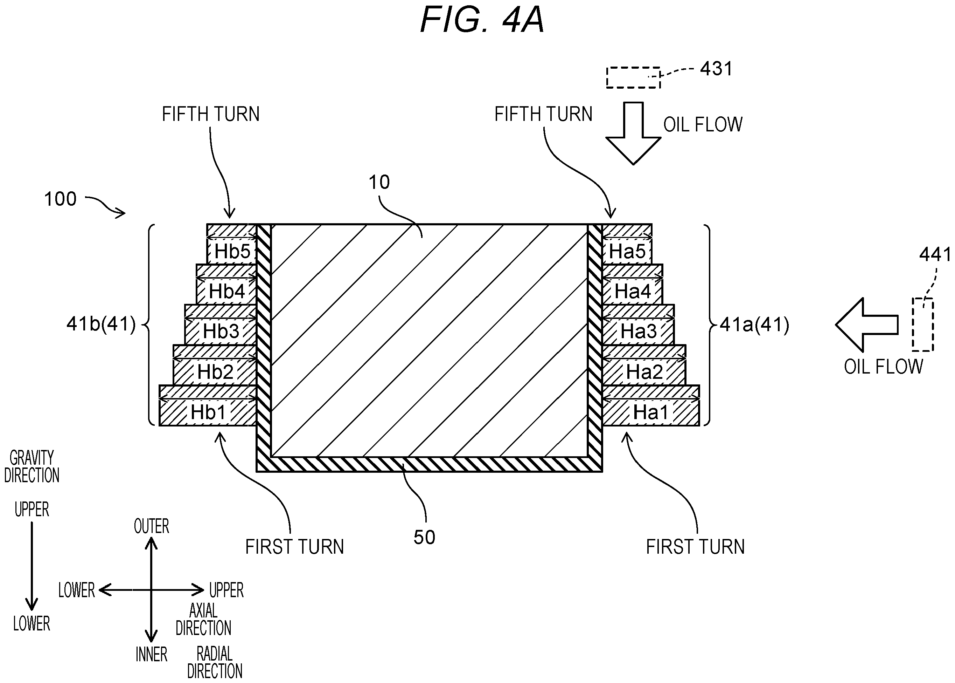

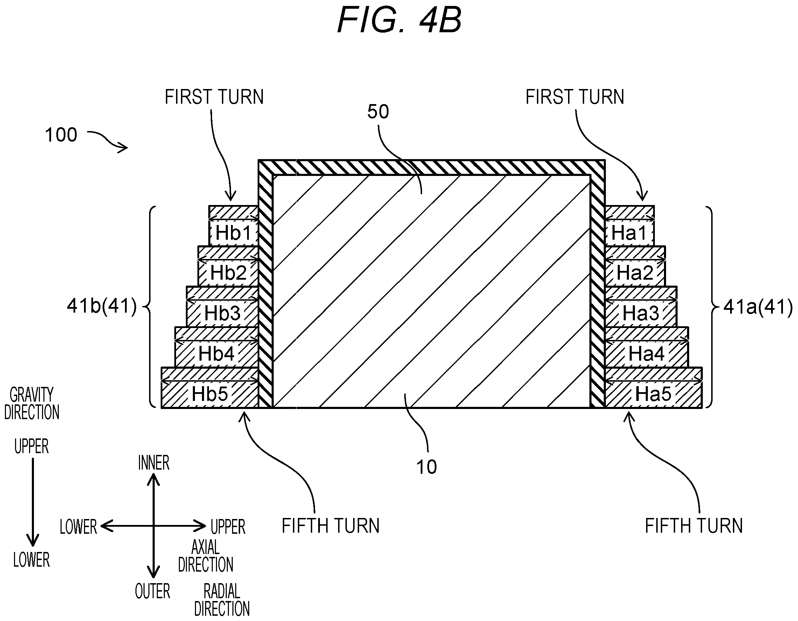

Teeth 10 and yoke 20 are each formed, for example, by blanking electromagnetic steel sheets containing silicon and the like and then stacking the electromagnetic steel sheets. Coils 40 are attached to the plurality of teeth 10 with insulators 50 (see Figs. 4A and 4B) interposed therebetween and are accommodated in slots 30. As described above, coil 40 has, as coil ends 41, first coil end 41a and second coil end 41b. A shape of coil 40 will be described in detail later.

In the present exemplary embodiment, in accordance with phases of currents flowing through coils 40, coils 40 each may be referred to as coils U1 to U4, coils V1 to V4, and coils W1 to W4, in some cases.

Rotor 200 includes rotary shaft 210, rotor core 220, and a plurality of permanent magnets 230. Rotor core 220 has rotary shaft 210 as an axial center. The plurality of magnets 230 are embedded in rotor core 220, and N poles and S poles are alternately arranged along the outer circumferential direction of rotary shaft 210 to face stator 100. A material, a shape, and properties of magnet 230 can be appropriately changed in accordance with an output of motor 1000. Rotor core 220 is formed, for example, by blanking electromagnetic steel sheets containing silicon and the like and then stacking the electromagnetic steel sheets.

Coils U1 to U4, coils V1 to V4, and coils W1 to W4 are connected in series. Three phase currents of U, V, and W phases that have a phase difference of 120° at an electrical angle are supplied to coils U1 to U4, coils V1 to V4, and coils W1 to W4, and a rotating magnetic field is generated in stator 100. The rotating magnetic field and a magnetic field generated by magnets 230 provided in rotor 200 interact with each other to generate torque, and thus, rotary shaft 210 rotates while being supported by bearings 320.

Note that, in the present disclosure, similar functions and effects can be obtained even in such a configuration in which coils U1 to U4, coils V1 to V4, and coils W1 to W4 are connected to stator 100 in parallel or in another connection configuration.

### [Configuration of main part of stator and coil]

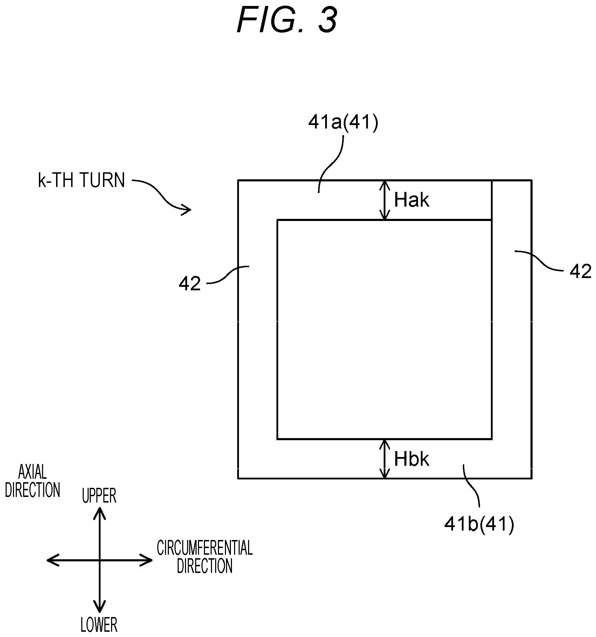

Fig. 2 is a schematic view of the stator as viewed from the axial direction. Fig. 3 is a schematic view of a k-th turn of the coil as viewed from the radial direction. Fig. 4A is a cross-sectional view taken along line IVA-IVA in Fig. 2. Fig. 4B is a cross-sectional view taken along line IVB-IVB in Fig. 2. Note that, for the sake of convenience in description, yoke 20 is not illustrated in Figs. 2, 4A, and 4B. In addition, the number of windings of coil 40, that is, the number of turns is set to 5, but is not particularly limited thereto. The number of turns of coil 40 may be n (n is an integer of 2 or more).

As illustrated in Fig. 2, coil 40 is a component formed by spirally winding a conductive wire made of copper or the like. Coil 40 is a molded coil formed by molding the conductive wire. Although not illustrated, an insulating film is formed on a surface of the conductive wire constituting coil 40.

The "molded coil" in the present specification does not include a coil obtained by only spirally winding a conductive wire having a constant width and thickness.

The molded coil is formed, for example, by preparing a plurality of rectangular plate members having different lengths, widths, or thicknesses, and joining these plate members by cold pressure welding, welding, or another method. A material of the plate member is a low-resistance material such as copper or aluminum.

The molded coil may be formed by so-called casting in which copper or the like is melted and poured into a mold. The molded coil may be formed by bending, at a predetermined position, a plate-shaped conductive wire formed in advance to have a width or thickness that differs midways. Alternatively, the molded coil may be formed by rolling a plate-shaped conductive wire having a constant width and thickness at a predetermined portion, changing the width or thickness midways, and then spirally winding the conductive wire. In short, the molded coil is formed by processing in still another way in addition to winding a conductive wire or by a method different from simply winding a conductive wire.

Since coil 40 is the molded coil, a shape of each turn can be freely changed as will be described later.

As illustrated in Fig. 3, an outer shape of a k-th turn (k is an integer of 1 ≤ k ≤ n) of coil 40 is a quadrangular ring shape having four side portions as viewed from the radial direction. Two side portions facing each other and extending in the circumferential direction correspond to coil ends 41, respectively. As described above, coil end 41 positioned on an axially upper side is first coil end 41a. Coil end 41 positioned on an axially lower side is second coil end 41b. Two side portions 42 facing each other and extending in the axial direction are accommodated in slot 30.

In addition, heights Hak and Hbk illustrated in Fig. 3 correspond to heights of the k-th turn in first coil end 41a and second coil end 41b, respectively. In the present specification, a first turn is positioned on a side close to the axial center of motor 1000, and an n-th turn is positioned on a side close to yoke 20. That is, the n-th turn is arranged on a radially outer side of the first turn.

As illustrated in Fig. 2, an arrangement order of 12 coils 40 arranged at equal intervals along the circumferential direction is I to XII. Oil is injected from first injection port 431 and second injection port 441 of supply pipe 420 toward first coil end 41a of coil 40 arranged at each of positions I, II, and XII. The position of coil 40 to which oil is directly injected is not particularly limited to the example illustrated in Fig. 2. For example, oil may be directly injected to first coil end 41a of coil 40 arranged at each of positions I, III, and XI. However, as will be described later, in view of the fact that oil injected to first coil end 41a flows to a lower side in the gravity direction by its own weight, oil is preferably injected to coil 40 positioned on an upper side with respect to position IV and position X in the gravity direction.

In the present exemplary embodiment, shapes of first coil end 41a and second coil end 41b are different depending on the position of coil 40 in stator 100.

Specifically, in coil 40 arranged at each of positions I to III, XI, and XII, as illustrated in Fig. 4A, a height of coil end 41 increases from a fifth turn toward the first turn. On the other hand, in coil 40 arranged at each of positions V to IX, as illustrated in Fig. 4B, the height of coil end 41 increases from the first turn to the fifth turn. Note that coil 40 arranged at each of positions IV and X may have a shape illustrated in Fig. 4A or a shape illustrated in Fig. 4B.

By doing this, oil injected to first coil end 41a of coil 40 arranged at each of positions I, II, and XII is once dammed at each first turn, and is suppressed from flowing toward a lower side in the gravity direction. In addition, oil flowing downward in the gravity direction along first coil end 41a is temporarily dammed at each fifth turn at first coil end 41a of coil 40 arranged at each of positions V to IX, and is suppressed from flowing toward the lower side in the gravity direction. As a result, oil which is a refrigerant is likely to be applied to each of first coil ends 41a of coils other than coil 40 to which oil is directly injected.

Figs. 4A and 4B illustrate an example in which the height of coil end 41 sequentially changes, but the present disclosure is not particularly limited thereto. For example, in the example illustrated in Fig. 4A, height Ha1 of the first turn may be higher than heights Ha2 to Ha5 of other turns. In this case, heights Ha2 to Ha5 may be equal or different. Similarly, in the example illustrated in Fig. 4B, height Ha5 of the fifth turn may be higher than heights Ha1 to Ha4 of other turns. In this case, heights Ha1 to Ha4 may be equal or different.

In the example illustrated in Fig. 4A, height Ha1 of the first turn and height Ha2 of the second turn may be higher than the heights of other turns. In the example illustrated in Fig. 4B, height Ha5 of the fifth turn and height Ha4 of the fourth turn may be higher than the heights of other turns. In the example illustrated in Fig. 4A, height Ha2 of the second turn may be higher than the heights of other turns. In the example illustrated in Fig. 4B, height Ha4 of the fourth turn may be higher than the heights of other turns.

That is, in a case where coil 40 is stacked n turns (n is an integer of 2 or more), in first coil end 41a to which oil is directly injected, the height of the k-th turn (k is an integer and 1 ≤ k ≤ n) may be higher than the heights of other turns, and the k-th turn may be positioned on a lower side in the gravity direction with respect to at least one different turn.

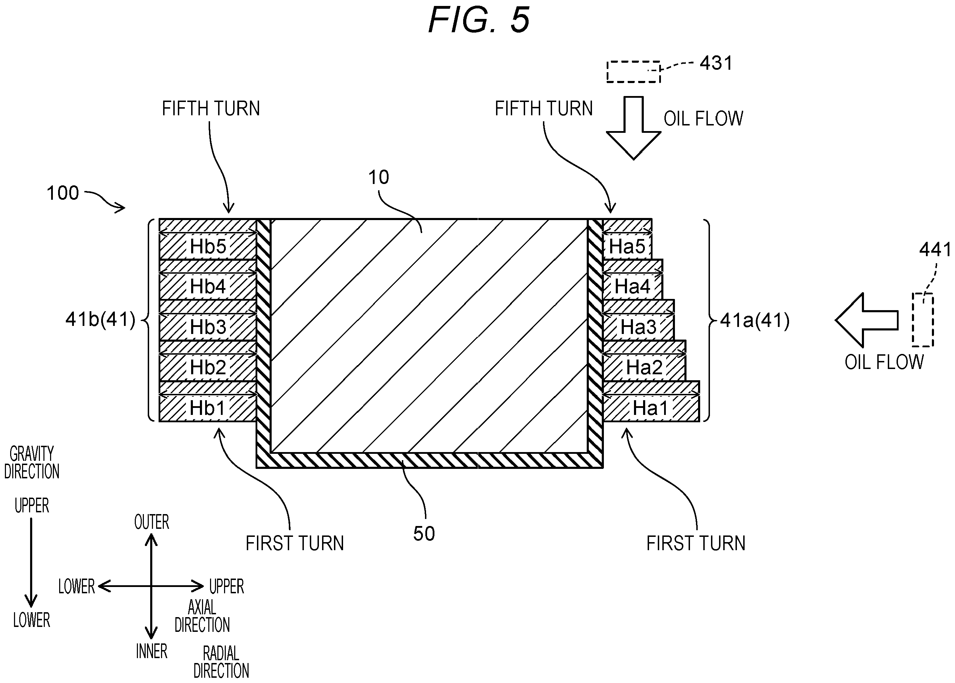

Fig. 5 is a schematic cross-sectional view of a main part of another stator of the motor according to the first exemplary embodiment. In the example illustrated in Fig. 5, the height of first coil end 41a increases from the first turn to the fifth turn. On the other hand, the height of the coil of the k-th turn in second coil end 41b is equal. By doing this, oil injected to first coil end 41a is temporarily dammed at the first turn, and is suppressed from flowing toward the lower side in the gravity direction. Oil flowing downward in the gravity direction along first coil end 41a is temporarily dammed at the fifth turn in first coil end 41a, and is suppressed from flowing toward the lower side in the gravity direction. On the other hand, oil does not flow to second coil end 41b.

### [Effects and the like]

As described above, coil 40 according to the present exemplary embodiment is used for stator 100 of motor 1000. Coils 40 are formed by winding a conductive wire having a quadrangular cross section and stacking the conductive wire n turns (n is an integer of 2 or more). The axial direction which is the direction in which the axial center of motor 1000 extends intersects with the gravity direction.

Coil 40 has coil ends 41 at both ends in the axial direction. In coil end 41 to which oil is directly injected, the height of the k-th turn (k is an integer and 1 ≤ k ≤ n) is higher than the heights of other turns. The k-th turn is positioned on a lower side in the gravity direction with respect to at least one another turn.

According to the present exemplary embodiment, in coil end 41 to which oil is directly injected, in this case, in first coil end 41a, the height of the k-th turn is set to be higher than the height of the turn positioned on an upper side in the gravity direction with respect to the k-th turn. By doing this, in a case where oil which is a refrigerant is injected to first coil end 41a, the k-th turn can dam oil from flowing to the lower side in the gravity direction. As a result, along first coil end 41a, it is possible to increase the amount of oil flowing from coil 40 to which oil is directly injected to coil 40 adjacent thereto and positioned on the lower side in the gravity direction. That is, oil is easily moved between adjacent coil ends 41. As a result, it is possible to cause oil to efficiently flow from an upper side to the lower side in the gravity direction along the surface on the axially upper side of first coil end 41a. Therefore, heat exchange efficiency between coil 40 and oil is improved. In addition, each coil 40 in stator 100 can be efficiently cooled with a small amount of oil. Since the amount of discharged oil can be reduced, oil pump 410 can be downsized. Therefore, cost of cooling device 400 and motor 1000 can be reduced.

Since coil 40 is the aforementioned molded coil, a height of a specific turn can be easily changed in coil end 41.

The height of coil end 41 preferably becomes higher toward the lower side in the gravity direction. The height of the first turn or the height of the n-th turn of coil end 41 is preferably higher than the heights of other turns.

By doing this, in a case where oil which is a refrigerant is injected to first coil end 41a, it is possible to reliably dam oil from flowing to the lower side in the gravity direction. As a result, each coil 40 in stator 100 can be efficiently cooled with a small amount of oil. In addition, oil pump 410 can be downsized. Therefore, cost of cooling device 400 and motor 1000 can be reduced.

Motor 1000 according to the present exemplary embodiment includes rotor 200 having rotary shaft 210 including the axial center, stator 100 provided coaxially with rotor 200 and at a predetermined interval from rotor 200, and motor case 300 accommodating stator 100 and rotor 200 on an inside.

Stator 100 includes stator core 110 having a plurality of teeth (tooth portions) 10 and coil 40 attached to each of the plurality of teeth 10.

Motor 1000 further includes cooling device 400 that supplies oil which is a refrigerant toward at least one coil 40.

Cooling device 400 includes oil pump (pump) 410 that discharges oil, and supply pipe 420 that is connected to oil pump 410, extends into motor case 300, and supplies oil discharged from oil pump 410 toward first coil end 41a of coil 40.

According to the present exemplary embodiment, oil supplied from cooling device 400 can be injected to coil 40 to reliably cool coil 40 which is a main heat source in motor 1000. As a result, it is possible to suppress a thermal loss generated in coil 40. Therefore, the efficiency of motor 1000 can be enhanced. In particular, since oil is injected toward coil end 41 of coil 40 which is hardly cooled, coil 40 can be efficiently cooled. In addition, in a case where oil which is a refrigerant is injected to first coil end 41a, it is possible to temporarily dam oil from flowing to the lower side in the gravity direction. Thus, it is possible to cause the oil to efficiently flow from the upper side to the lower side in the gravity direction along the surface on the axially upper side of first coil end 41a. That is, oil is easily moved between adjacent coil ends 41. As a result, each coil 40 in stator 100 can be efficiently cooled with a small amount of oil. Therefore, the efficiency of motor 1000 can be enhanced. In addition, since the amount of discharged oil can be reduced, oil pump 410 can be downsized. Therefore, cost of cooling device 400 and motor 1000 can be reduced.

Supply pipe 420 has first injection port 431 for injecting oil from the upper side in the gravity direction. Coil end 41 includes first coil end 41a that is an end on the axially upper side and second coil end 41b that is an end on the lower side. First injection port 431 is preferably arranged above first coil end 41a as viewed in the gravity direction.

By doing this, the flow of oil injected from first injection port 431 is temporarily dammed by first coil end 41a. Thus, oil easily flows toward the lower side in the gravity direction along the surface on the axially upper side of first coil end 41a. As a result, each coil 40 in stator 100 can be efficiently cooled with a small amount of oil. Therefore, the efficiency of motor 1000 can be enhanced.

Supply pipe 420 preferably further includes second injection port 441 for injecting oil in the axial direction. By doing this, first coil end 41a can be more efficiently cooled. Oil injected from second injection port 441 and blown onto the surface on the axially upper side of first coil end 41a is once dammed at first coil end 41a, and easily flows toward the lower side in the gravity direction along the surface on the axially upper side of first coil end 41a. As a result, each coil 40 in stator 100 can be efficiently cooled with a small amount of oil. Therefore, the efficiency of motor 1000 can be enhanced.

### <Variation>

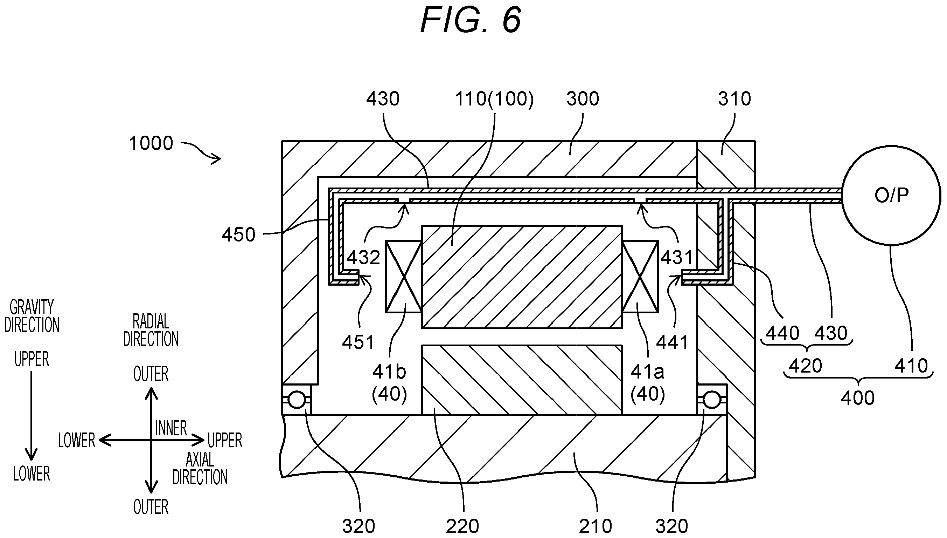

Fig. 6 is a schematic cross-sectional view of motor 1000 according to a variation in an axial direction. Note that, for the sake of convenience in description, Fig. 6 and sequent drawings denote parts similar to the parts of the first exemplary embodiment with the same reference marks, and details thereof will not be described.

Motor 1000 of the present variation illustrated in Fig. 6 is different from motor 1000 of the first exemplary embodiment illustrated in Fig. 1A in the shape of supply pipe 420. Specifically, main pipe 430 passes between stator 100 and motor case 300 and extends to a radially outer side of second coil end 41b. One 431 of a pair of first injection ports is an intermediate portion of main pipe 430 and is arranged on the radially outer side of first coil end 41a. Further, the other 432 of the pair of first injection ports is an intermediate portion of main pipe 430 and is arranged on the radially outer side of second coil end 41b. Therefore, oil injected from the pair of first injection ports 431 and 432 is blown onto the surfaces on the radially outer sides of first coil end 41a and second coil end 41b.

As illustrated in Fig. 6, another branch pipe 450 extends from the end of main pipe 430 toward the axial center of motor 1000, and second injection port 451 facing the surface on the axially lower side of second coil end 41b of the pair of second injection ports 441 and 451 is provided at the end of branch pipe 450. Therefore, oil injected from second injection port 441 facing first coil end 41a of the pair of second injection ports 441 and 451 is blown onto the surface on the axially upper side of first coil end 41a, and oil injected from second injection port 451 facing second coil end 41b is blown onto the surface on the axially lower side of second coil end 41b.

According to the present variation, oil which is a refrigerant can be injected not only to first coil end 41a but also to second coil end 41b. As a result, it is possible to cause oil to efficiently flow from the upper side to the lower side in the gravity direction along each of the surface on the axially upper side of first coil end 41a and the surface on the axially lower side of second coil end 41b. Therefore, the heat exchange efficiency between coil 40 and oil is further improved than the configuration illustrated in the first exemplary embodiment. As a result, each coil 40 in stator 100 can be efficiently cooled with a small amount of oil. In addition, since the amount of discharged oil can be reduced, oil pump 410 can be downsized. Therefore, cost of cooling device 400 and motor 1000 can be reduced.

In coil 40 used in motor 1000 of the present variation, since oil is also injected to second coil end 41b, the shape illustrated in Fig. 5 is not applied.

In the configuration illustrated in the first exemplary embodiment, since supply pipe 420 is not routed to near second coil end 41b, an arrangement space of supply pipe 420 in motor case 300 can be reduced. As a result, as compared with the configuration illustrated in Fig. 6, a volume of motor 1000 can be reduced by a portion surrounded by a broken line illustrated in Fig. 1A, and motor 1000 can be downsized.

### (Second exemplary embodiment)

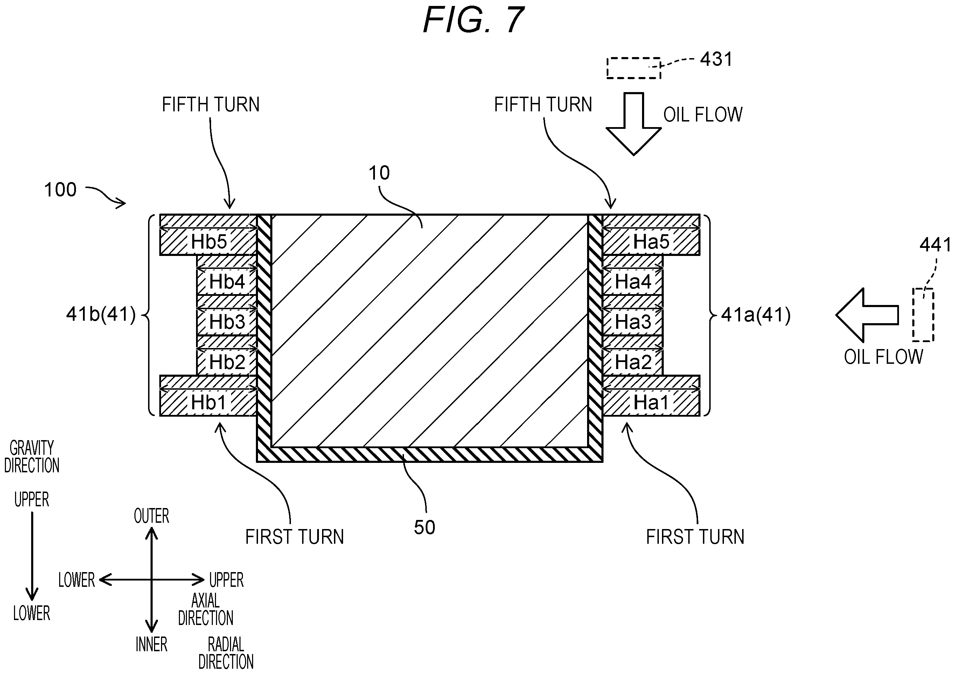

Fig. 7 is a schematic cross-sectional view of a main part of stator 100 of motor 1000 according to a second exemplary embodiment. Note that all coils 40 attached to stator 100, that is, coils 40 arranged at positions I to XII illustrated in Fig. 2 have shapes illustrated in Fig. 7.

Coil 40 illustrated in Fig. 7 is different from coil 40 illustrated in the first exemplary embodiment in that heights Ha1 and Ha5 of the first turn and the fifth turn in first coil end 41a are higher than heights Ha2 to Ha4 of the second to fourth turns. The present exemplary embodiment is different from coil 40 described in the first exemplary embodiment in that heights Hb 1 and Hb5 of the first turn and the fifth turn in second coil end 41b are higher than heights Hb2 to Hb4 of the second to fourth turns.

According to the present exemplary embodiment, as illustrated in Fig. 7, in first coil end 41a, a space sandwiched between the first turn and the fifth turn functions as an oil flow path. As a result, oil injected to first coil end 41a smoothly flows toward the lower side in the gravity direction along the surface on the axially upper side of first coil end 41a. As a result, each coil 40 in stator 100 can be efficiently cooled with a small amount of oil. Therefore, the efficiency of motor 1000 can be enhanced. Since the amount of discharged oil can be reduced, oil pump 410 can be downsized. Therefore, cost of cooling device 400 and motor 1000 can be reduced.

In a case where oil is injected to second coil end 41b as illustrated in Fig. 6, in second coil end 41b, a space sandwiched between the first turn and the fifth turn also functions as an oil flow path. As a result, oil injected to second coil end 41b smoothly flows toward the lower side in the gravity direction along the surface on the axially lower side of second coil end 41b. As a result, each coil 40 in stator 100 can be efficiently cooled with a small amount of oil. Therefore, the efficiency of motor 1000 can be enhanced. Since the amount of discharged oil can be reduced, oil pump 410 can be downsized. Therefore, cost of cooling device 400 and motor 1000 can be reduced.

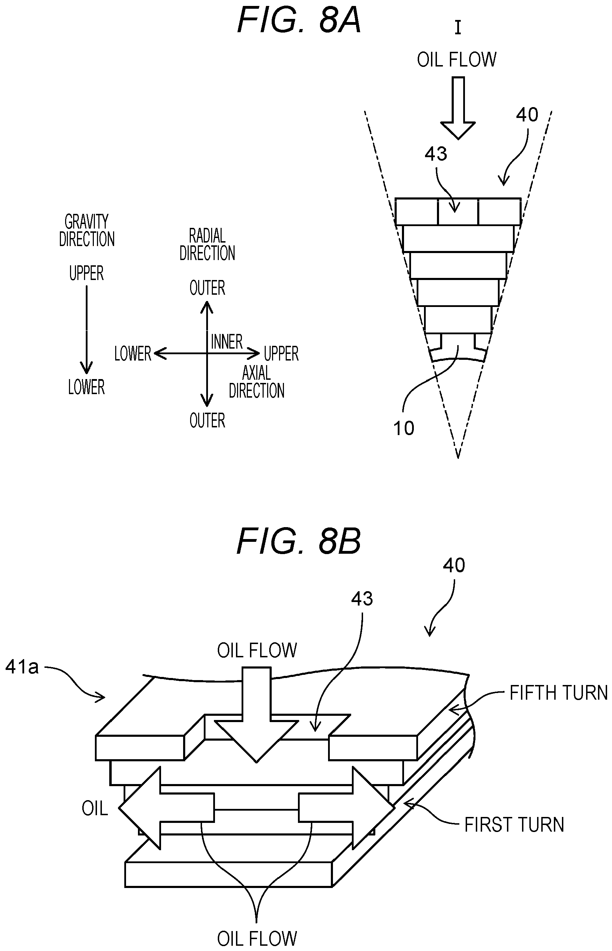

In first coil end 41a, in order to reliably introduce oil into the space sandwiched between the first turn and the fifth turn, it is preferable to provide cutout 43 for introducing oil, which will be described in detail later with reference to Figs. 8A and 8B.

Fig. 8A is a schematic view of a main part of another stator 100 of motor 1000 according to the second exemplary embodiment as viewed from the axial direction. Fig. 8B is a perspective view of coil 40 of Fig. 8A.

Coil 40 illustrated in Figs. 8A and 8B is arranged at a position where oil is directly injected inside stator 100, for example, at positions I, II, and XII illustrated in Fig. 2.

In coil 40 illustrated in Figs. 8A and 8B, cutout 43 is provided in the fifth turn in first coil end 41a. By doing this, oil injected from first injection port 431 is reliably introduced into the space sandwiched between the first turn and the fifth turn through cutout 43. As a result, oil injected to first coil end 41a smoothly flows toward the lower side in the gravity direction along the surface on the axially upper side of first coil end 41a. As a result, each coil 40 in stator 100 can be efficiently cooled with a small amount of oil. Therefore, the efficiency of motor 1000 can be enhanced. Since the amount of discharged oil can be reduced, oil pump 410 can be downsized. Therefore, cost of cooling device 400 and motor 1000 can be reduced.

In first coil end 41a of coil 40 illustrated in Figs. 7, 8A, and 8B, height Ha2 of the second turn may be equal to heights Ha1 and Ha5 of the first turn and the fifth turn. Alternatively, height Ha4 of the fourth turn may be equal to heights Ha1 and Ha5 of the first turn and the fifth turn. Heights Ha2, Ha4 of the second turn and the fourth turn may be equal to heights Ha1 and Ha5 of the first turn and the fifth turn.

In first coil end 41a, the height of each turn may be set such that a recess is formed as viewed from the axially upper side. Similarly, in second coil end 41b, the height of each turn may be set such that a recess is formed as viewed from the axially lower side.

That is, in coils 40 formed by winding a conductive wire having a quadrangular cross section and stacking the conductive wire n turns, the heights of at least the first and n-th turns of coil end 41 may be higher than the heights of other turns.

Cutout 43 is not necessarily provided only in the fifth turn. In coil end 41, cutout 43 may be provided in a turn positioned on an upper side in the gravity direction with respect to other turns among the turns having a higher height than the heights of other turns. By doing this, as described above, oil can be reliably flown to the lower side in the gravity direction along an axial end face of coil end 41. As a result, each coil 40 in stator 100 can be efficiently cooled with a small amount of oil. Therefore, the efficiency of motor 1000 can be enhanced. Oil pump 410 can be downsized. Therefore, cost of cooling device 400 and motor 1000 can be reduced.

### (Third exemplary embodiment)

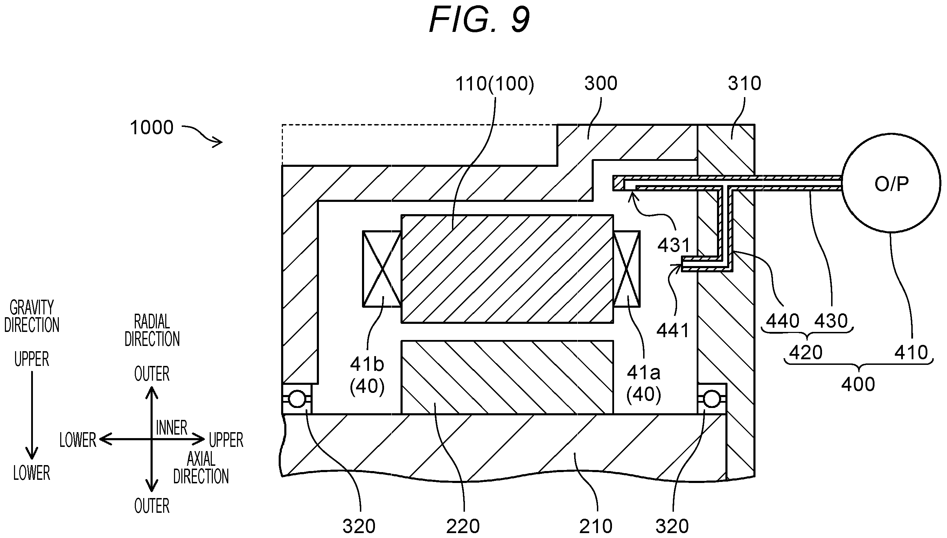

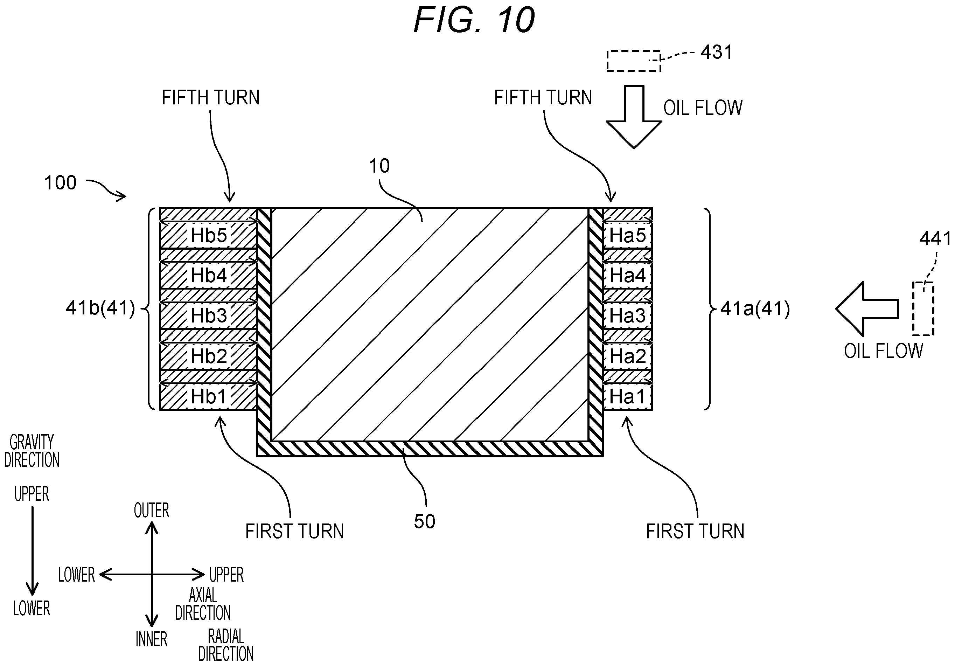

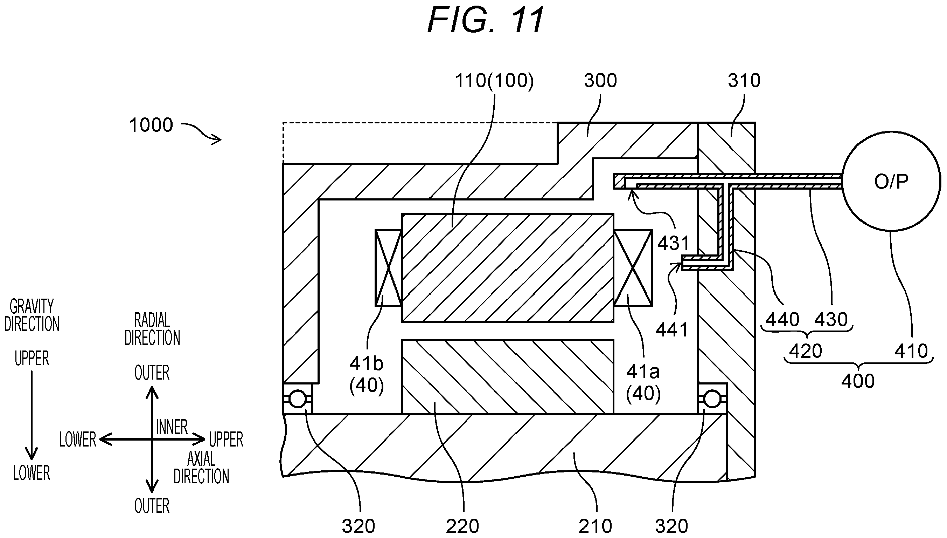

Fig. 9 is a schematic cross-sectional view of motor 1000 according to a third exemplary embodiment. Fig. 10 is a schematic cross-sectional view of a main part of stator 100 of motor 1000 according to the third exemplary embodiment. Fig. 11 is a schematic cross-sectional view of another motor according to the third exemplary embodiment in the axial direction.

Motor 1000 illustrated in Fig. 9 has a configuration similar to the configuration of motor 1000 illustrated in the first exemplary embodiment. However, a surface area of second coil end 41b onto which oil which is a refrigerant is not blown is set to be larger than a surface area of first coil end 41a onto which oil is blown. Further, a volume of second coil end 41b may be larger than a volume of first coil end 41a.

By doing this, second coil end 41b can have a larger heat radiation area than first coil end 41a, and the amount of heat radiation at second coil end 41b can be increased. On the other hand, since oil is injected to first coil end 41a having a small heat radiation area and in which heat is easily accumulated, the amount of heat radiation from first coil end 41a can be increased by heat exchange with oil. That is, it is possible to reliably dissipate heat generated by coil 40 while a need for injecting oil to second coil end 41b is eliminated. Therefore, the efficiency of motor 1000 can be enhanced. Since the amount of discharged oil can be reduced, oil pump 410 can be downsized. Therefore, cost of cooling device 400 and motor 1000 can be reduced.

In addition, according to the present exemplary embodiment, the arrangement space of supply pipe 420 in motor case 300 can be reduced, similarly to the description in the variation. As a result, as compared with the configuration illustrated in Fig. 6, a volume of motor 1000 can be reduced by a portion surrounded by a broken line illustrated in Fig. 9, and motor 1000 can be downsized. In addition, since a volume of first coil end 41a can be set to be smaller than a volume of second coil end 41b, a size of motor 1000 in the axial direction can be reduced. Therefore, motor 1000 can be downsized.

The surface area of second coil end 41b is appropriately set in accordance with the amount of heat radiation required from second coil end 41b. The shapes of first coil end 41a and second coil end 41b can be appropriately changed within a range in which the surface area of first coil end 41a is smaller than the surface area of second coil end 41b. For example, in each of coils 40 illustrated in Figs. 4A, 4B, 7, 8A, and 8B, height Hbk of the k-th turn of second coil end 41b may be higher than height Hak of the k-th turn of first coil end 41a. In coil 40 illustrated in Fig. 5, height Hbk of the k-th turn of second coil end 41b may be equal to height Ha1 of the first turn of first coil end 41a.

As illustrated in Fig. 10, the heights of all the turns may be equal in first coil end 41a. In second coil end 41b, the heights of all the turns may be equal. However, in this case, height Hbk of the k-th turn of second coil end 41b needs to be higher than height Hak of the k-th turn of first coil end 41a.

As illustrated in Fig. 11, in motor 1000, the surface area of first coil end 41a onto which oil which is a refrigerant is blown may be larger than the surface area of second coil end 41b onto which oil is not blown. The volume of first coil end 41a may be larger than the volume of second coil end 41b.

The amount of heat radiation from coil 40 can be reliably increased by directly injecting oil to coil end 41 rather than dissipating heat from coil end 41 to an external atmosphere. Thus, as illustrated in Fig. 11, oil may be injected to first coil end 41a having a larger surface area than second coil end 41b to actively cool coil 40.

In this case, it is possible to reliably dissipate heat generated by coil 40 while a need to inject oil to second coil end 41b is eliminated, and the efficiency of motor 1000 can be enhanced. Since the amount of discharged oil can be reduced, oil pump 410 can be downsized. Therefore, cost of cooling device 400 and motor 1000 can be reduced. Further, the arrangement space of supply pipe 420 in motor case 300 can be reduced. Therefore, motor 1000 can be downsized.

Note that, in coil 40 illustrated in Fig. 11, the shapes of first coil end 41a and second coil end 41b can be appropriately changed within a range in which the surface area of second coil end 41b is smaller than the surface area of first coil end 41a, similarly to the case illustrated in Fig. 9. However, in this case, a relationship between the height of the k-turn in first coil end 41a and the height of the k-turn in second coil end 41b is opposite to the relationship described above. For example, in each of coils 40 illustrated in Figs. 4A, 4B, 7, 8A, and 8B, height Hak of the k-th turn of first coil end 41a is higher than height Hbk of the k-th turn of second coil end 41b. In coil 40 illustrated in Fig. 10, height Hak of the k-th turn of first coil end 41a is higher than height Hbk of the k-th turn of second coil end 41b.

### (Other exemplary embodiments)

Note that a new exemplary embodiment can be formed by appropriately combining the components described in the first to third exemplary embodiments and the variation. For example, coil 40 illustrated in Figs. 7, 8A, and 8B may be used for motor 1000 of the variation illustrated in Fig. 6. In this case, it goes without saying that cutout 43 is also preferably provided in the fifth turn in second coil end 41b.

Note that, in the present specification, three-phase and 12-slot motor 1000 has been described as an example. However, the present disclosure is not limited thereto. Another structure may be used, for example, three-phase and 6-slot motor 1000.

The structure of supply pipe 420 is also not particularly limited to the example illustrated in Figs. 1A and 6. For example, branch pipes 440 and 450 or second injection ports 441 and 451 may be omitted.

Note that the structure of motor 1000 of the present disclosure is not limited to the example illustrated in the first to third exemplary embodiments and the variation. The structure of motor 1000 of the present disclosure may take still another structure.

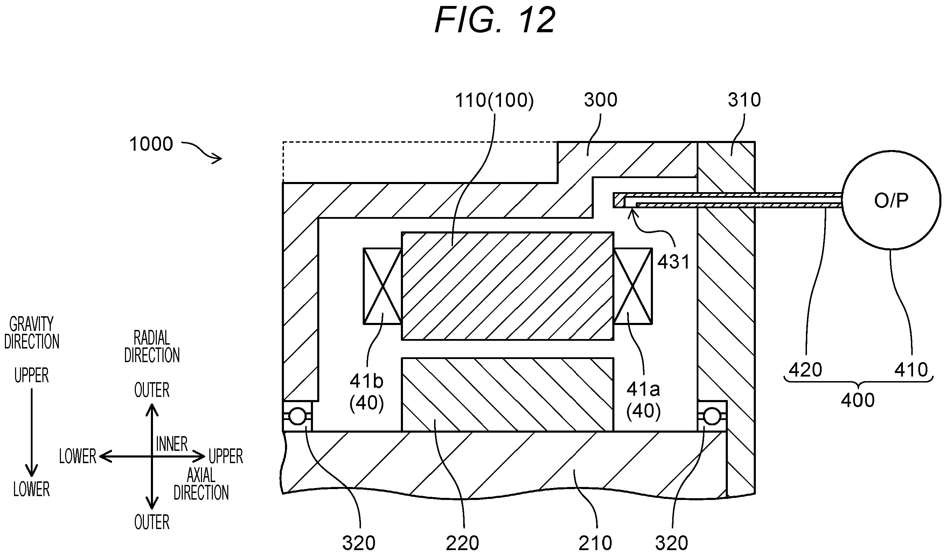

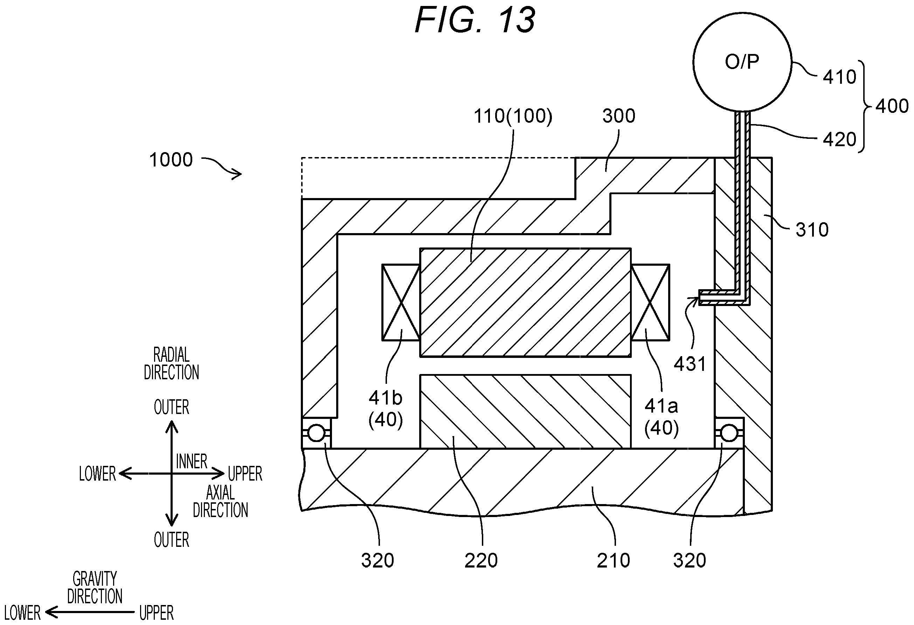

Fig. 12 is a schematic cross-sectional view of motor 1000 according to another variation in an axial direction. Fig. 13 is a schematic cross-sectional view of motor 1000 according to still another variation in an axial direction.

In the first to third exemplary embodiments and the like, it has been described that supply pipe 420 includes main pipe 430 and branch pipe 440. Only one supply pipe 420 may be formed. For example, as illustrated in Fig. 12, supply pipe 420 may have a shape using only main pipe 430 illustrated in Fig. 1A. Alternatively, the supply pipe may have a shape using only branch pipe 440.

A direction in which cooling device 400 is attached to motor 1000 may be changed in accordance with a direction in which motor 1000 is attached to an object to be installed.

For example, as illustrated in Fig. 13, motor 1000 may be installed such that the gravity direction and the axial direction are the same direction. In such a case, as illustrated in Fig. 13, oil pump 410 may be installed on the outer peripheral side in the radial direction. In this case, supply pipe 420 extends into motor case 300 through the inside of end plate 310, similarly to branch pipe 440 illustrated in Fig. 1A.

### INDUSTRIAL APPLICABILITY

The coil of the present disclosure facilitates the movement of the refrigerant between adjacent coil ends, and increases cooling efficiency by the refrigerant. Therefore, the coil of the present disclosure is useful for the motor.

### REFERENCE MARKS IN THE DRAWINGS

- 10: teeth (tooth portion)
- 20: yoke
- 30: slot
- 40: coil
- 41: coil end
- 41a: first coil end
- 41b: second coil end
- 42: side portion
- 43: cutout
- 50: insulator
- 100: stator
- 110: stator core
- 200: rotor
- 210: rotary shaft
- 220: rotor core
- 230: magnet
- 300: motor case
- 310: end plate
- 320: bearing
- 400: cooling device
- 410: oil pump (pump)
- 420: supply pipe
- 430: main pipe
- 431, 432: first injection port
- 440, 450: branch pipe
- 441, 451: second injection port
- 1000: motor

## Claims

1. A coil that is used for a stator of a motor,
when an axial direction that is a direction in which an axial center of the motor extends is used to intersect with a gravity direction,
the coil being disposed by winding a conductive wire having a quadrangular cross section and stacking the conductive wire n turns in which n is an integer of 2 or more,
the coil including coil ends at both ends in the axial direction,
a height of a k-th turn in which k is an integer and satisfies 1 ≤ k ≤ n being higher than a height of another turn in one of the coil ends, and
the k-th turn being positioned lower than another turn in the gravity direction.

2. The coil according to Claim 1, wherein a height of the coil end becomes higher toward the lower side in the gravity direction.

3. The coil according to Claim 1 or 2, wherein a height of a first turn or a height of an n-th turn of the coil end is higher than a height of another turn.

4. The coil according to Claim 1, wherein heights of first and n-th turns of the coil end are higher than a height of another turn.

5. The coil according to Claim 4, wherein, among turns in which a height of the coil end is higher than the height of the other turn, a cutout is provided in a turn positioned on an upper side in the gravity direction with respect to the other turn.

6. A motor comprising:
a rotor that has a rotary shaft extending in the axial direction;
the stator that is provided coaxially with the rotor and is at a predetermined interval from the rotor; and
a motor case that accommodates the stator and the rotor on an inside,
wherein the stator includes
a stator core that includes a plurality of tooth portions, and
the coil according to any one of Claims 1 to 5, attached to each of the plurality of tooth portions.

7. The motor according to Claim 6, further comprising a cooling device that supplies a refrigerant toward the coil,
wherein the cooling device includes
a pump that discharges the refrigerant, and
a supply pipe that is connected to the pump, extends into the motor case, and supplies the refrigerant discharged from the pump toward the coil.

8. The motor according to Claim 7, wherein the supply pipe includes a first injection port that injects the refrigerant from an upper side in the gravity direction.

9. The motor according to Claim 8, wherein the supply pipe further includes a second injection port that injects the refrigerant in the axial direction.

10. The motor according to Claim 8 or 9, wherein
the coil end includes a first coil end that is one end in the axial direction and a second coil end that is another end in the axial direction, and
as viewed in the gravity direction, the first injection port is arranged above at least the first coil end.

11. The motor according to Claim 10, wherein a surface area of the second coil end is larger than a surface area of the first coil end.

12. The motor according to Claim 10, wherein a surface area of the first coil end is larger than a surface area of the second coil end.
